# EUROPEAN PATENT SPECIFICATION

(11) **EP 1 286 091 B1**
(45) Date of publication and mention of the grant of the patent: **23.03.2005**
(21) Application number: 02253996.9
(22) Date of filing: 07.06.2002
(51) Int. Cl.: F16K 17/38

(54) **Heat activated isolation valve**
Hitzeaktivierter Abschlusshahn
Robinet d'isolement thermoactivé

(30) Priority: 09.06.2001 GB 0114226
(43) Date of publication of application: 26.02.2003
(73) Proprietor: Brookes, George, Old Glossop, Derbyshire SK13 9SB (GB)
(72) Inventor: Brookes, George, Old Glossop, Derbyshire SK13 9SB (GB)
(74) Representative: Allman, Peter John

(56) References cited:
- CH-A- 664 838
- DE-A- 3 530 465
- FR-A- 2 651 295

## Description

The present application relates to valves, in particular valves that may be used to isolate gas used in fuel gas distribution.

There is a demand for isolation valves which may be used to manually isolate a fuel gas supply. The valves are used to isolate premises from the gas supply when, for example, the premises are unoccupied or when a leak has been detected. It is essential that the valves are highly reliable and also, as they are required in large numbers, cheap to produce.

Ball valves sealed with O-rings have been used in such applications. These valves comprise a body defining a through bore, an aperture extending through a wall of the body and receiving a valve spindle and a ball located within the passageway and coupled to the spindle. The ball defines a through bore that may be orientated so that it is either aligned with the passageway or transverse to the passageway. The O-rings used enable the valves to be made cheaply, and overcome the expense and precise engineering required in their absence.

The O-rings used are commonly made of plastics materials such as Teflon ®. In the event of fire these types of O-rings may be destroyed by a combination of melting and/or burning. Thus ball valves incorporating such O-rings are not fireproof.

An additional problem faces such isolation valves. Not only are they required to provide a gas seal in the event of a fire but also there is great demand for valves that are able to recognise the presence of elevated temperature, for example as a result of a fire, and isolate the gas supply so that the additional danger of a gas explosion is reduced.

EP-A-0 838 004 describes a way of overcoming these problems. This document describes a spring arrangement that in the event of fire (and associated O-ring destruction) drives a heat/fire resistant metal member against the ball forming a substantially gas proof seal. This documents also describes a heat activated isolation valve for installation in series with a ball valve, the isolation valve being closed in the presence of an elevated temperature, such as that generated by a fire. This ensures that the gas supply is cut off even if the ball valve is open, but does require an additional component in the form of the isolation valve.

CH 664838 discloses a stop valve for gas or liquid including a lever which may be turned between limiting stops to open or close the valve. The control lever housing also includes a spiral spring which is held under tension, with a fuse element holding it. If the ambient temperature exceeds a set value (92 degrees centigrade), then the fuse melts and the action of the spring is applied to the valve lever. In the course of normal use, the lever may be moved between the positions defined by the two stops, without restriction but after the fuse element has melted, the valve is moved automatically into its closed position. The mechanism provides an automatic protection preventing the flow being continued in the event of fire.

The present invention has the objective of providing a ball valve suitable for use as a gas mains isolator.

According to the present invention there is provided a heat activated isolation valve comprising a housing which defines a passageway, a valve member located within the passageway, a spindle extending through an opening in the housing from the valve member and being rotatable relative to the housing about a pre-determined axis, and at least one seal arranged between the valve member and the housing, the valve member defining a bore therethrough and being rotatable by the spindle between a valve open position in which the bore communicates with the passageway on opposite sides of the valve member and a valve closed position in which the bore is isolated from the passageway on at least one side of the valve member, wherein a spring biased mechanism is provided which is arranged to move the valve member to the closed position if the temperature exceeds a pre-determined limit, the valve member is a ball, the at least one seal is defined by an annular sealing member that bears against the ball, and the at least one sealing member is pressed against the ball by a fusible member interposed between the sealing member and the housing, the fusible member melting if the temperature exceeds the said predetermined limit.

It is preferred that the spring biased mechanism comprises a pre-stressed spring the action of which is resisted by a stop member. Generally the stop member is arranged to release the action of the spring if the pre-determined temperature limit is exceeded. In this regard the stop member is fabricated from a material which melts at the pre-determined temperature limit. The pre-determined limit may be 100°C.

Preferably the valve comprises an intermediate member acted on by the spring biased mechanism and acting on the spindle if the pre-determined temperature limit is exceeded. The intermediate member may comprise a collar arranged on the housing around the spindle, the collar being rotatable on the housing about the spindle axis if the temperature exceeds the pre-determined limit.

The collar may support a pin extending parallel to the spindle, the spring biased mechanism acting between the pin and an anchor point on the housing.

The spindle may support a detent which co-operates with a stop surface defined by the housing to limit the rotation of the spindle, the pin mounted on the collar engaging the detent on the spindle to close the valve if the pre-determined temperature is exceeded. The stop member may extend through the collar into the housing.

The sealing member may be spring biased against the ball. This is preferably achieved by the at least one sealing member being supported on a heat resistant tubular member which forms a seal with the ball if the sealing member is destroyed.

Embodiments of the invention will now be described with reference to the accompanying drawings in which:
Figure 1 is a side view of the preferred embodiment of the valve of the present invention:
Figure 2 is an exploded perspective view of the components shown in Figure 1;
Figure 3 is a view from above of the embodiment illustrated in Figures 1 and 2;
Figure 4 schematically illustrates the interrelationship between a spindle housing, a fusible stop member and spindle collar of the embodiment illustrated in Figures 1 to 3;
Figure 5 is a view from below of the collar shown in Figure 4;
Figure 6 is a side view of the collar of Figure 5;
Figure 7 schematically illustrates the interrelationship between a valve housing and a ball valve in an open position in the valve of Figure 1;
Figure 8 schematically illustrates the interrelationship between the valve housing and the ball valve in a closed position;
Figure 9 schematically illustrates the interrelationship between the ball valve and seals in the valve of Figure 1;
Figure 10 is a cross-sectional view through the valve of Figure 1, whereby a fusible member between a sealing member and the housing is not shown;
Figures 11, 12 and 13 schematically illustrate the interengagement between the ball valve and seals of the valve of Figure 1 ;
Figure 14 illustrates a seal support arrangement in a valve according to the invention;
Figure 15 illustrates an alternative spring arrangement to that shown in Figure 5; and
Figure 16 shows an embodiment of the invention incorporating the spring of Figure 15.

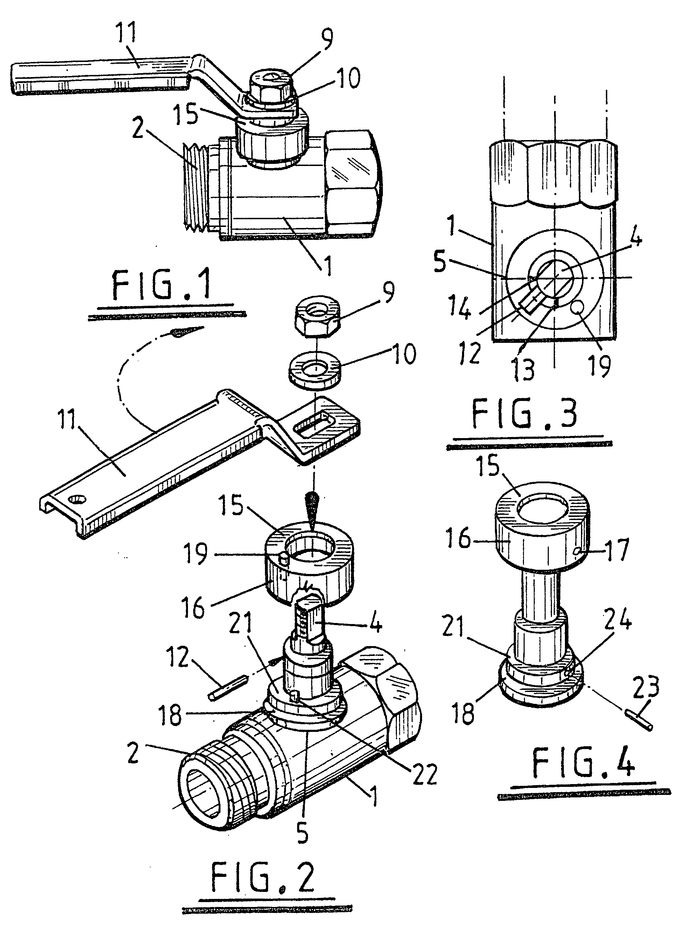

Referring to Figures 1 to 13, the illustrated structure comprises a housing formed by a main body 1 and an insert 2 which is screwed into one end of the body 1. The housing defines a passageway in which a ball valve member 3 is located, the ball valve member 3 being retained between the main body 1 and the insert 2.

A spindle 4 extends through an opening in a projection 5 on an upper portion of the main body 1 and slidably engages the ball valve member 3 via a ball slot 6, engaged by a spindle projection 7.

The ball valve member 3 and the spindle 4 are securely slidably inter-engaged. The ball slot 6 is substantially uniform in cross-section. The valve is assembled by inserting the spindle 4 via the passageway through the aperture in the main body 1. A seal is formed between the spindle 4 and body 1 by an O-ring provided within a groove 8 in the spindle 4. The spindle 4 is then rotated within the aperture such that spindle projection 7 extends parallel with the valve passageway. Ball valve member 3 is then pushed into the main body 1 so that its ball slot 6 engages the spindle projection 7. The valve member 3 is retained in the body by the insert 2 which is screwed into the body 1. Further components described below are introduced into the passageway with the ball valve member 3.

The spindle 4 has an upper threaded portion supporting a nut 9 and a washer 10. The nut 9 and washer 10 retain a handle 11 that allows manual operation of the ball valve member 3 between an open and a closed position. To assist the user in knowing when the valve is open or closed and to limit the movement of the ball valve member 3 between these two extremes, the spindle 4 has an aperture for insertion of a pin or detent 12 which co-operates with stop surfaces 13 and 14 of the projection 5. When the pin 12 abuts against the stop surface 13 the valve is open. When the pin 12 abuts against the stop surface 14 the valve is closed.

The projection 5 has a collar rotatably mounted thereon. The collar comprises a radially extending upper section 15 supporting a peripheral skirt 16 through which an opening 17 is formed. The skirt 16 rests against an outer step 18 defined by the projection 5. The collar further comprises a pin 19 which extends parallel to the spindle 4, a first portion extending above section 15 and a second portion extending below section 15 into a space defined between the collar and the projection 5.

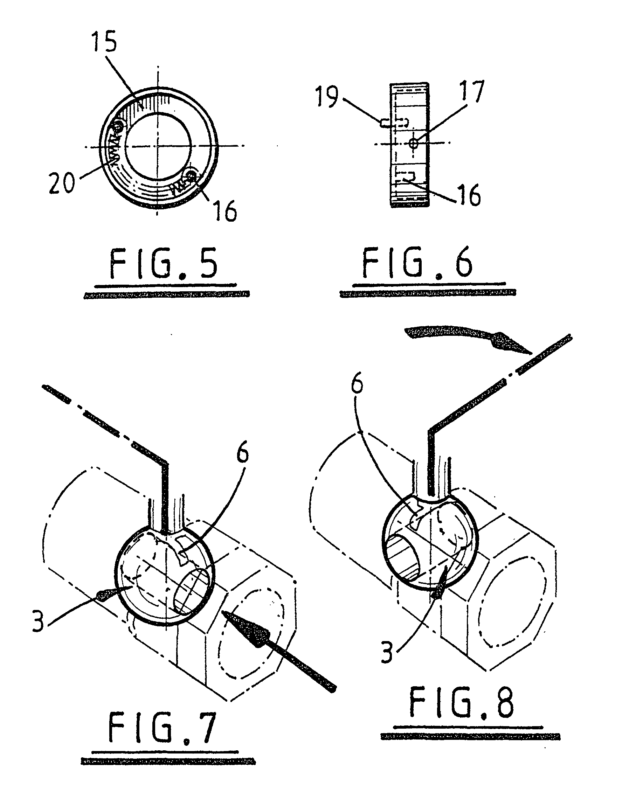

A helical spring 20 which is tensioned is housed in the space defined between the collar and the projection 5. The spring 20 is shown in Figure 5 in the position that it assumes within the collar given that the spring is forced to extend around the outside of the portion of the projection 5 extending from surface 21 from which a pin 22 extends. The spring 20 is connected at one end to pin 22 which forms an anchor point in the housing and at the other end to the portion of the pin 19 which extends into the space defined between the collar and the projection 5. Hence the pin 19 and therefore the collar are rotationally biased by the spring 20. More specifically, the pin 19 is biased toward the pin 12. If the collar is free to rotate on the projection 5, the pin 19 bears against the pin 12, causing the spindle 4 to rotate towards the valve closed position.

In normal conditions, the biasing action of the spring 20 is resisted by a stop member in the form of a fusible pin 23. The pin 23 extends through the aperture 17 in the peripheral skirt 16 of the collar into an aperture 24 in the projection 5, thus locking the collar against rotation relative to the body 1. Thus under normal conditions, the valve may be operated between an open and a closed position by rotation of the handle 11 and the spring 20 has no effect.

The pin 23 has a predetermined melting point. In the illustrated embodiment the pin 23 has a melting point of substantially 100°C, although it will be appreciated that the value of the predetermined temperature at which the pin 23 melts may be varied to suit particular applications. As soon as the predetermined temperature is reached, the pin 23 melts and the spring 20 drives the top part of the pin 19 against the pin 12. The force applied to the pin 12 causes the spindle 4 to rotate to the valve closed position.

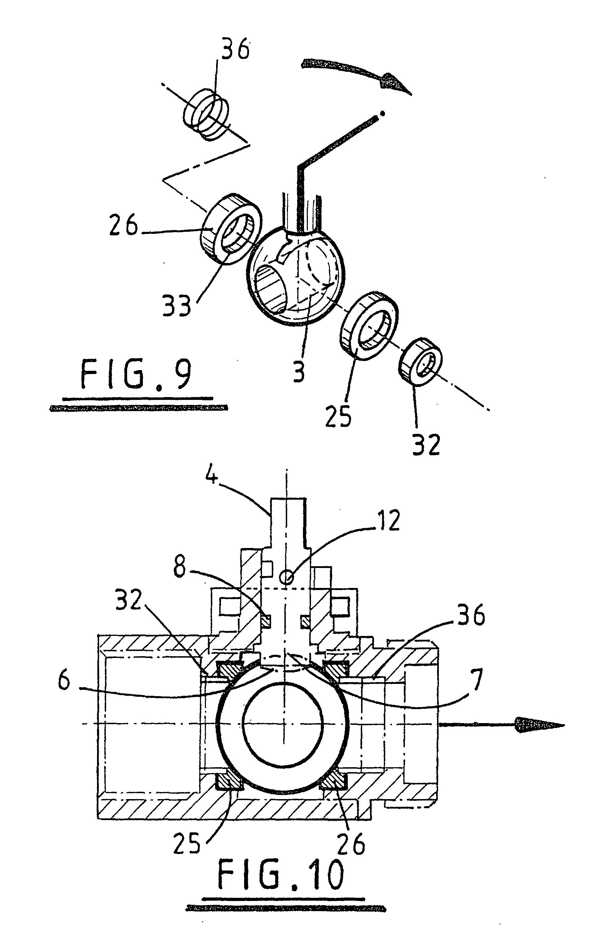

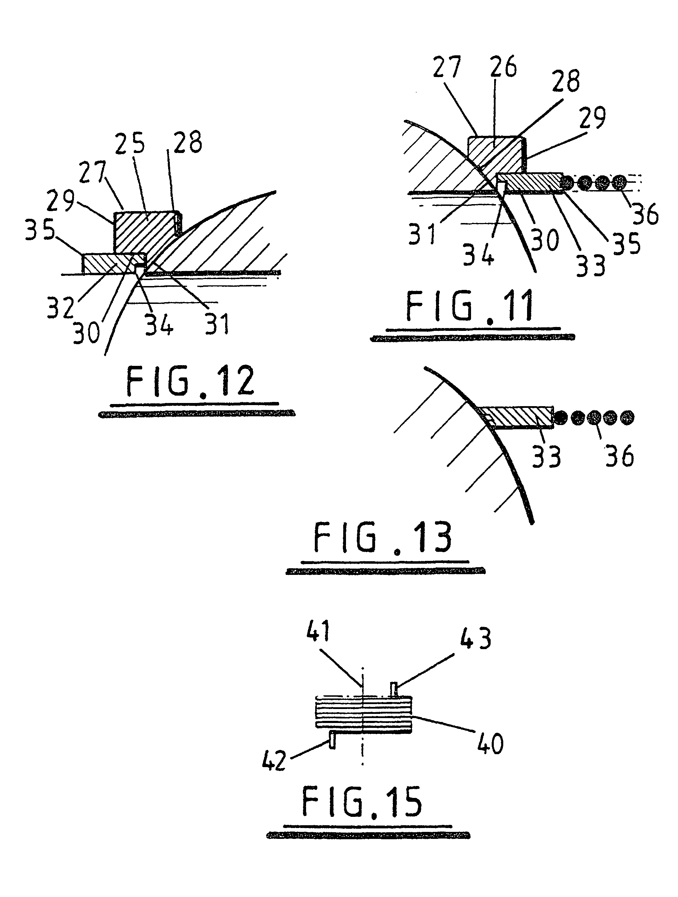

The ball valve member 3 is engaged by first sealing member 25 and a second sealing member 26 as shown in Figures 10 to 12. To achieve a gas tight seal and to permit easy operation of the valve, the first and second sealing members comprise a low friction plastics material such as PTFE. As is best appreciated from Figures 11 and 12, each sealing member defines an outer cylindrical surface 27 which is a sliding fit inside a socket defined by the body 1, a part-spherical concave surface 28 which bears against the ball valve member 3, an end surface 29, and an inner surface 30 which extends to a lip 31. A heat resistant tubular sealing member 32 is received within sealing member 25 and the heat resistant tubular sealing member 33 is received within sealing member 26. Each sealing member 32, 33 defines a stepped axial end 34 facing the ball valve member. Each stepped end 34 engages the lip 31 of the adjacent sealing member 25, 26 and therefore is held clear of the ball valve member. The sealing members 32, 33 also define axial ends 35 facing away from the ball valve member.

The axial end 35 of the tubular sealing member 33 is acted upon by a compression spring 36 bearing against a flange defined by the body 1. The axial end 35 of the tubular sealing member 34 bears against a flange defined by the body 1. The tubular sealing members 33, 34 are a sliding fit inside sockets defined by the body 1. Thus the spring 36 biases all the components 33, 26, 3, 25 and 32 to the left in Figure 10 to maintain a secure seal. When the ball valve member 3 is in the closed position (as shown in Figure 10) the slot and projection linkage between the ball valve member and the spindle 4 ensures that the ball valve member is free to move in the axial direction under the influence of the bias supplied by the spring 36 in the event that the PTFE sealing members 25, 26 are melted away. This ensures that a secure seal is always maintained. It will be appreciated that the spring 36 could be arranged to bear against the sealing member 32 rather than the sealing member 33.

If in the case of a fire the ambient temperature around the valve is increased to exceed 100°C, the pin 23 melts. In its absence there is nothing to resist the bias action of the spring member 20, which thus causes rotation of the collar 15, which in turn (via the upper portion of the pin 19, which is rotated towards and abuts against the pin 12) causes the spindle 4 to be rotated until the pin 12 abuts against the stop surface 14. Hence the ball valve member 3 is rotated to the closed position (as shown in Figure 8). In this state the valve may still be opened manually via handle 11, working against the spring bias of the spring 20. However, as soon as the manual force is removed, the bias provided by the spring member 20 re-closes the valve.

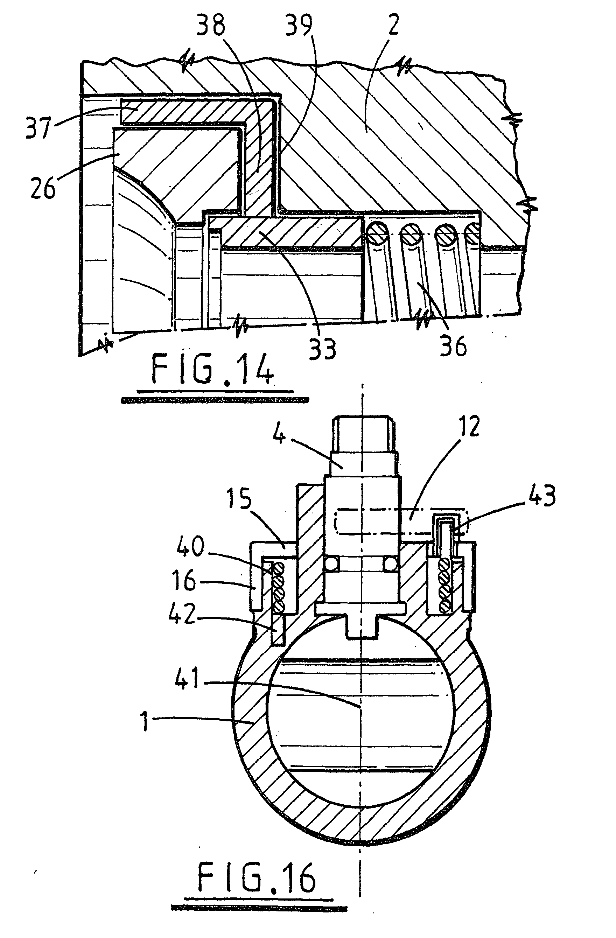

The force delivered by the spring 20 has to be sufficient to overcome frictional forces on the ball. To reduce such frictional forces, one or both of the sealing members 25, 26 is supported by an additional fusible component which also melts when the temperature is sufficiently high for the pin 23 to melt. For example, as illustrate in Figure 14, the sealing member 26 may be received in a supporting collar 37 of a low melting point alloy, the collar including a washer portion 38 positioned on the side of the sealing member 26 remote from the ball. The collar 37 is supported on a step 39 defined within the valve body insert 2 that is screwed into the main body 1. As the insert is screwed in, the step 39 pushes against the washer portion 38 of the collar 37 which in turn pushes the PTFE ring 26 against the ball. The ball in turn pushes the ring 25 onto ring 32 which is supported by a step in the main body. A relatively high pressure is exerted on the ball by the PTFE rings 25 and 26, that pressure corresponding to the sum of the pressures applied to the collar 37 by the step 39 and the pressure applied by the spring 36. If the collar 37 melts however the step 39 no longer contributes to the applied pressure, and therefore a lower pressure is applied corresponding to that provided by the spring 36 alone. This lower pressure maintains the PTFE rings 25, 26 in contact with the ball, but presents a lower resistance to rotation of the ball to the closed position. Therefore, if the pin 23 also melts the ball moves easily to the closed position under the influence of the force provided by the spring 20.

In the event of a prolonged fire, the temperature may be raised to a level where both the first and second sealing members 25, 26 are destroyed. When this occurs the bias provided by the coiled spring 36 acts to drive the heat resistant tubular member 33 against the surface of the ball valve member 3. This causes the ball valve member 3 to slide over the spindle projection 7 into contact with the heat resistant tubular member 32.

The steps in the axial ends 34 of the heat resistant tubular members 32, 33 define ball engaging edges of relatively large diameter which provide a seal with the ball valve members 3 after the adjacent sealing members 25, 26 have been destroyed. Thus, as shown in Figure 13, even though the sealing member 26 has been destroyed, gas cannot escape from the valve assembly except for very limited leakage which may occur between the metal-to-metal seals defined by the ball valve member 3 and the sealing edge defined by the step in the tubular member 33 which is in contact with the ball valve member. Thus the valve will have a minimal leakage rate even in the event that it is exposed to very high temperatures.

In the embodiment described above, the spring-biased mechanism relies upon a coil spring 20 which is in tension and secured at its opposite ends to pins 19 and 22, one of which is mounted on the upper section 15 of the collar and the other of which is mounted on the housing. Figure 15 shows a torsion spring which may be used in an alternative spring arrangement, and Figure 16 shows the torsion spring in an assembled valve. The torsion spring has a central coiled section 40 extending around an axis 41 and two end pins 42 and 43. In use, as shown in Figure 16 the central section 40 extends around the housing inside the collar skirt 16 such that the axis 41 is coaxial with the rotation axis of the spindle 4. The pin 42 is received in a bore drilled in the body 1 to anchor one end of the spring to the body 1. The pin 43 which is an integral part of the torsion spring extends into a tubular pin 44 secured in a hole drilled in the upper section 15 of the collar. Thus the pin 44 performs the same function as the portion of the pin 19 which projects from the collar in the embodiment of Figures 1 to 13, that is if the pin (not shown) holding the collar against rotation melts, the collar rotates until the pin 44 bears against the pin 12 to cause the spindle 4 to move to the valve closed position.

## Claims

1. A heat activated isolation valve comprising a housing (1,2) which defines a passageway, a valve member located within the passageway, a spindle (4) extending through an opening in the housing (1,2) from the valve member and being rotatable relative to the housing about a predetermined axis, and at least one seal (25,26) arranged between the valve member and the housing (1,2), the valve member defining a bore therethrough and being rotatable by the spindle (4) between a valve open position in which the bore communicates with the passageway on opposite sides of the valve member and a valve closed position in which the bore is isolated from the passageway on at least one side of the valve member, wherein a spring biased mechanism (20;40) is provided which is arranged to move the valve member to the closed position if the temperature exceeds a predetermined limit, the valve member is a ball (3), the at least one seal (25,26) is defined by an annular sealing member (25,26) that bears against the ball, **characterised in that** the at least one sealing member (25,26) is pressed against the ball (3) by a fusible member (37) interposed between the sealing member (25,26) and the housing (1,2), the fusible member (37) melting if the temperature exceeds the said predetermined limit.

2. A valve according to claim 1, wherein the spring biased mechanism (20;40) comprises a pre-stressed spring (20;40) the action of which is resisted by a stop member (23), the stop member (23) being arranged to release the action of the spring (20;40) if the pre-determined temperature limit is exceeded.

3. A valve according to claim 2, wherein the stop member (23) is fabricated from a fusible material which melts at the pre-determined temperature limit.

4. A valve according to claim 2 or 3, wherein the spring (20;40) is a tension (20) or torsion (40) spring.

5. A valve according to any preceding claim, comprising an intermediate member (15,16,19) acted on by the spring biased mechanism (20;40) and acting on the spindle (4) if the pre-determined temperature limited is exceeded.

6. A valve according to claim 5, wherein the intermediate member (15,16,19) comprises a collar (15,16) arranged on the housing (1,2) around the spindle (4), the collar (15,16) being rotatable on the housing (1,2) about the spindle (4) axis if the temperature exceeds the pre-determined limit.

7. A valve according to claim 6, wherein the collar (15,16) supports a pin (19) extending parallel to the spindle (4), the spring biased mechanism (20;40) acting between the pin (19) and an anchor point (22) on the housing (1,2).

8. A valve according to claim 7, wherein the spring biased mechanism (20;40) is housed in a space defined between the collar (15,16) and the housing (1,2).

9. A valve according to claim 7 or 8, wherein the spindle (4) supports a detent (12) which co-operates with stop surfaces defined by the housing (1,2) to limit the rotation of the spindle (4), the pin (19) mounted on the collar (15,16) engaging the detent (12) on the spindle (4) to close the valve if the pre-determined temperature is exceeded.

10. A valve according to any one of claims 6 to 9, when dependent upon claim 2, wherein the stop member (23) extends through the collar (15,16) into the housing (1,2).

11. A valve according to any preceding claim, wherein the at least one sealing member is spring (36) biased against the ball (3).

12. A valve according to claim 11, wherein the at least one sealing member (25,26) is supported on a heat resistant tubular member (32;33) which forms a seal with the ball (3) if the sealing member (25,26) is destroyed.

## Patentansprüche

1. Hitzeaktiviertes Absperrventil, das aufweist: ein Gehäuse (1,2), das einen Durchgang definiert, ein in dem Durchgang angeordnetes Ventilelement, eine Spindel (4), die von dem Ventilelement aus durch eine Öffnung in dem Gehäuse (1,2) hindurchgeht und bezüglich des Gehäuses um eine vorgegebene Achse drehbar ist, und mindestens eine zwischen dem Ventilelement und dem Gehäuse (1, 2) angeordnete Dichtung (25, 26), wobei das Ventilelement eine Bohrung durch die Dichtung definiert und durch die Spindel (4) zwischen einer offenen Ventilstellung, in der die Bohrung mit dem Durchgang auf gegenüberliegenden Seiten des Ventilelements in Verbindung steht, und einer geschlossenen Ventilstellung drehbar ist, in der die Bohrung von dem Durchgang auf mindestens einer Seite des Ventilelements getrennt ist, wobei ein federgespannter Mechanismus (20; 40) vorgesehen ist, der so eingerichtet ist, daß er das Ventilelement in die geschlossene Stellung bewegt, wenn die Temperatur einen vorgegebenen Grenzwert übersteigt, wobei das Ventilelement eine Kugel (3) ist, die mindestens eine Dichtung (25, 26) durch ein ringförmiges Dichtungselement (25, 26) definiert ist, das an der Kugel anliegt, **dadurch gekennzeichnet, daß** das mindestens eine Dichtungselement (25, 26) durch ein schmelzbares Element (37) an die Kugel (3) angedrückt wird, das zwischen dem Dichtungselement (25, 26) und dem Gehäuse (1,2) eingefügt wird, wobei das schmelzbare Element (37) schmilzt, wenn die Temperatur den vorgegebenen Grenzwert übersteigt.

2. Ventil nach Anspruch I, wobei der federgespannte Mechanismus (20; 40) eine vorgespannte Feder (20; 40) aufweist, der ein Anschlagelement (23) entgegenwirkt, wobei das Anschlagelement (23) so eingerichtet ist, daß es die Wirkung der Feder (20; 40) freigibt, wenn der vorgegebene Temperaturgrenzwert überschritten wird.

3. Ventil nach Anspruch 2, wobei das Anschlagelement (23) aus einem schmelzbaren Material gefertigt wird, das bei dem vorgegebenen Temperaturgrenzwert schmilzt.

4. Ventil nach Anspruch 2 oder 3, wobei die Feder (20; 40) eine Zugfeder (20) oder Torsionsfeder (40) ist.

5. Ventil nach einem der vorstehenden Ansprüche, das ein Zwischenglied (15, 16, 19) aufweist, auf das der federgespannte Mechanismus (20; 40) wirkt und das auf die Spindel (4) wirkt, wenn der vorgegebene Temperaturgrenzwert überschritten wird.

6. Ventil nach Anspruch 5, wobei das Zwischenglied (15, 16, 19) eine Manschette (15, 16) aufweist, die am Gehäuse (1,2) um die Spindel (4) herum angeordnet ist, wobei die Manschette (15, 16) auf dem Gehäuse (1,2) um die Achse der Spindel (4) drehbar ist, wenn die Temperatur den vorgegebenen Grenzwert übersteigt.

7. Ventil nach Anspruch 6, wobei die Manschette (15,16) einen Stift (19) trägt, der sich parallel zur Spindel (4) erstreckt, wobei der federgespannte Mechanismus (20; 40) zwischen dem Stift (19) und einem Festpunkt (22) am Gehäuse (1,2) wirkt.

8. Ventil nach Anspruch 7, wobei der federgespannte Mechanismus (20; 40) in einem Zwischenraum untergebracht ist, der durch die Manschette (15, 16) und das Gehäuse (1,2) definiert ist.

9. Ventil nach Anspruch 7 oder 8, wobei die Spindel (4) eine Arretierung (12) trägt, die mit durch das Gehäuse (1,2) definierten Anschlagflächen zusammenwirkt, um die Drehung der Spindel (4) zu begrenzen, wobei der auf der Manschette (15, 16) montierte Stift (19) mit der Arretierung (12) an der Spindel (4) in Eingriff kommt, um das Ventil zu schließen, wenn die vorgegebene Temperatur überschritten wird.

10. Ventil nach einem der Ansprüche 6 bis 9, falls diese von Anspruch 2 abhmgig sind, wobei sich das Anschlagelement (23) durch die Manschette (15, 16) in das Gehäuse (1,2) erstreckt.

11. Ventil nach einem der vorstehenden Ansprüche, wobei das mindestens eine Dichtungselement eine gegen die Kugel (3) vorgespannte Feder (36) ist.

12. Ventil nach Anspruch 11, wobei das mindestens eine Dichtungselement (25, 26) auf einem hitzebeständigen röhrenförmigen Element (32; 33) aufliegt, das mit der Kugel (3) eine Dichtung bildet, wenn das Dichtungselement (25, 26) zerstört wird.

## Revendications

1. Vanne d'isolement thermoactivée comprenant un boîtier (1, 2), définissant un passage, un élément de vanne agencé dans le passage, une tige (4) s'étendant à travers une ouverture dans le boîtier (1, 2), à partir de l'élément de vanne et pouvant tourner par rapport au boîtier autour d'un axe prédéterminé, et au moins un j oint (25, 26) agencé entre l'élément de vanne et le boîtier (1, 2), l'élément de vanne définissant un alésage le traversant et pouvant être tourné par la tige (4) entre une position de vanne ouverte, dans laquelle l'alésage communique avec le passage sur les côtés opposés du passage sur au moins un côté de l'élément de vanne, un mécanisme sollicité par ressort (20; 40) étant agencé de sorte à déplacer l'élément de vanne vers la position fermée lorsque la température dépasse une limite prédéterminée, l'élément de vanne étant constitué par une bille (3), le au moins un joint (25, 26) étant défini par un élément d'étanchéité annulaire (25, 26) reposant contre la bille, **caractérisée en ce que** le au moins un élément d'étanchéité (25, 26) est pressée contre la bille (3) par un élément fusible (37) agencé entre l'élément d'étanchéité (25, 26) et le boîtier (1, 2), l'élément fusible (37) étant porté à fusion lorsque la température dépasse ladite limite prédéterminée.

2. Vanne selon la revendication 1, dans laquelle le mécanisme sollicité par ressort (20; 40) comprend un ressort à précontrainte (20; 40) dont l'action est soumise à la résistance d'un élément d'arrêt (23), l'élément d'arrêt (23) étant destiné à déclencher l'action du ressort (20; 40) lorsque la limite de température prédéterminée est dépassée.

3. Vanne selon la revendication 2, dans laquelle l'élément d'arrêt (23) est composé d'un matériau fusible porté à fusion en présence de la limite de température prédéterminée.

4. Vanne selon les revendications 2 ou 3, dans laquelle le ressort (20; 40) est un ressort de tension (20) ou un ressort de torsion (40).

5. Vanne selon l'une quelconque des revendications précédentes, comprenant un élément intermédiaire (15, 16, 19) subissant l'action du mécanisme sollicité par ressort (20; 40) et agissant sur la tige (4) en cas de dépassement de la limite de température prédéterminée.

6. Vanne selon la revendication 5, dans laquelle l'élément intermédiaire (15, 16, 19) comprend un collier (15, 16) agencé sur le boîtier (1, 2), autour de la tige (4), le collier (15, 16) pouvant tourner sur le boîtier (1, 2), autour de l'axe de la tige (4), lorsque la température dépasse la limite prédéterminée.

7. Vanne selon la revendication 6, dans laquelle le collier (15, 16) supporte une goupille (19) s'étendant parallèlement à la tige (4), le mécanisme sollicité par ressort (20; 40) agissant entre la goupille (19) et un point d'ancrage (22) sur le boîtier (1, 2).

8. Vanne selon la revendication 7, dans laquelle le mécanisme sollicité par ressort (20; 40) est agencé dans un espace défini entre le collier (15,16) et le boîtier (1, 2).

9. Vanne selon les revendications 7 ou 8, dans laquelle la tige (4) supporte un cliquet (12) coopérant avec des surfaces d'arrêt définies par le boîtier (1, 2) pour limiter la rotation de la tige (4), la goupille (19) montée sur le collier (15, 16) s'engageant dans le cliquet (12) sur la tige (4) pour fermer la vanne en cas de dépassement de la température prédéterminée.

10. Vanne selon l'une quelconque des revendications 6 à 9, dépendant de la revendication 2, dans laquelle l'élément d'arrêt (23) s'étend à travers le collier (15, 16) dans le boîtier (1, 2).

11. Vanne selon l'une quelconque des revendications précédentes, dans laquelle le au moins un élément d'étanchéité est poussé par un ressort (3 6) contre la bille (3).

12. Vanne selon la revendication 11, dans laquelle le au moins un élément d'étanchéité (25, 26) est supporté sur un élément tubulaire résistant à la chaleur (32; 33) établissant un joint entre la bille (3) lorsque l'élément d'étanchéité (25, 26) est détruit.
